(19) Europäisches Patentamt / European Patent Office / Office européen des brevets

(11) **EP 2 423 477 B1**

(12) **FASCICULE DE BREVET EUROPEEN**

(45) Date de publication et mention
de la délivrance du brevet:
**31.08.2016 Bulletin 2016/35**

(51) Int Cl.:
**F01N 3/021** (2006.01)   **F01N 9/00** (2006.01)
**F01N 11/00** (2006.01)

(21) Numéro de dépôt: **11174347.2**

(22) Date de dépôt: **18.07.2011**

(54) **Procédé de détermination de l'état physique d'un filtre à particules**

Verfahren zur Feststellung des physikalischen Zustandes eines Partikelfilters

Method for determining the physical state of a particle filter

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.08.2010 FR 1056907**

(43) Date de publication de la demande:
**29.02.2012 Bulletin 2012/09**

(73) Titulaire: **Peugeot Citroën Automobiles SA
78140 Vélizy-Villacoublay (FR)**

(72) Inventeurs:
• **Colas, Hervé
95130 FRANCONVILLE (FR)**
• **Genies, Jean-Florent
78100 SAINT-GERMAIN-EN-LAYE (FR)**
• **Szymanski, Pierre
78400 CHATOU (FR)**

(74) Mandataire: **Ménès, Catherine
Peugeot Citroën Automobiles SA
Propriété Industrielle (LG081)
18, rue des Fauvelles
92250 La Garenne Colombes (FR)**

(56) Documents cités:
WO-A1-2006/123761     DE-A1-102004 048 135
FR-A1- 2 864 146      US-A1- 2006 059 901
US-A1- 2007 056 273

**Description**

L'invention se rapporte à un procédé de détermination de l'état physique d'un filtre à particules diesel par modélisation de l'accumulation et de la régénération des suies dans un contrôle moteur. La présente invention concerne un procédé de détermination de paramètres caractéristiques de l'état d'un filtre à particules

La combustion de combustible fossile comme le pétrole ou le charbon dans un système de combustion, en particulier le carburant diesel dans un moteur diesel, peut entraîner la production en quantité non négligeable de polluants qui peuvent être déchargés par l'échappement dans l'environnement et y causer des dégâts. Parmi ces polluants, les émissions de monoxyde de carbone, d'hydrocarbures imbrûlés et d'oxydes d'azote sont particulièrement toxiques.

Dans le but de limiter les rejets de ces émissions toxiques, les véhicules munis d'un moteur thermique sont de plus en plus souvent équipés de dispositifs antipollution. En particulier, un ensemble de catalyseurs peut transformer les constituants toxiques des gaz d'échappement en éléments moins toxiques comme l'eau ou le dioxyde de carbone.

Les dispositifs antipollution peuvent également comprendre un filtre à particules dont l'acronyme est FAP. Un tel filtre permet de piéger les particules de carbone issues de la combustion dans les cylindres du moteur du véhicule. La forme du filtre à particules est généralement cylindrique. En outre, il est réalisé en céramique. Le filtre est composé d'une multitude de canaux parallèles, de petits diamètres, qui piègent les particules. Ces dernières s'accumulent dans le filtre et il est périodiquement nécessaire de régénérer le filtre en éliminant les particules piégées afin d'éviter une perte de charge trop importante dans la ligne d'échappement. Pour cela, la température du filtre est augmentée jusqu'à atteindre une température à laquelle les particules de carbone brûlent. Plusieurs méthodes peuvent être utilisées pour élever la température. Par exemple une résistance chauffante peut être insérée dans le filtre. Cependant la méthode la plus répandue consiste à augmenter la température des gaz d'échappement qui vont traverser le filtre. A cette fin, il est possible par exemple d'injecter une quantité supplémentaire de carburant dans au moins un des cylindres sous forme de post-injection. Ce carburant s'enflamme en produisant une augmentation de température des gaz d'échappement. Une autre solution, qui peut être combinée à la post-injection, consiste à retarder l'injection principale de carburant. Cette post-injection peut entraîner une dilution de l'huile moteur par impaction du jet de carburant sur les parois du cylindre.

La combustion se propageant dans le filtre, il en résulte un gradient de température à l'intérieur du filtre qui, s'il est trop important, peut gravement endommager le filtre en provoquant des fissurations. De plus, une température globalement trop élevée (généralement au-delà de 1000°C) peut conduire à la destruction du filtre. Il est donc important de contrôler la combustion des particules piégées afin de ne pas provoquer des dommages irréversibles au filtre. La régénération du filtre est déclenchée automatiquement et se passe généralement à l'insu du conducteur.

Le besoin de régénération du filtre peut être détecté par la mesure de la perte de charge, c'est-à-dire en mesurant à l'aide d'un capteur la différence de pression entre l'entrée et la sortie du filtre. Le besoin de régénération peut aussi être estimé en fonction du nombre de kilomètres parcourus et des conditions d'utilisation du véhicule. Le besoin en régénération ainsi que la durée de la régénération peuvent enfin être évalués par un modèle embarqué dans le contrôle moteur. L'avantage de ce type de modèle réside dans le fait qu'ils sont capables d'évaluer la durée de régénération, la température atteinte et la masse de suie restante dans le filtre à particule en temps réelle pendant cette régénération. Une optimisation des conditions de régénération (durée, nombre de demande de régénération) est alors possible évitant ainsi les surcharges du filtre pouvant impliquer une destruction du filtre, ou les durée forfaitaire trop importantes des régénérations entraînant un risque de dilution de l'huile moteur et donc un risque de casse moteur, ainsi qu'une surconsommation de carburant pour le client.

Les modèles existant ne prennent pas en compte la résolution complète de la cinétique des réactions de combustion des suies en temps réel ce qui ne permet pas une évaluation correcte de l'amorçage et la durée de la combustion. En cas de sous-estimation, le risque est de faire une mauvaise estimation de la quantité de suies restantes, et donc de surcharger le filtre ce qui peut le détériorer. En cas de surestimation, le risque est de surconsommer. Un phénomène de dilution de l'huile moteur peut alors apparaître et entraîner des casses du moteur.

Il est également connu du document WO-A-2004/015248 décrit un système de contrôle de moteur mettant en oeuvre une stratégie contrôlant le moment et la durée d'une régénération forcée d'un filtre à particules. La stratégie est basée sur un modèle et sur l'utilisation d'une boucle fermée. La régénération forcée est commencée par retardement de moment du début d'injection de carburant et l'injection de carburant est ensuite ajustée pour augmenter l'action catalytique et pour rendre le procédé transparent pour le conducteur du véhicule.

Le document EP-A-1 873 369 décrit un procédé de gestion de la régénération d'un filtre à particules comprenant une première étape de régénération du filtre à une première vitesse, et une deuxième étape de régénération du filtre à une deuxième vitesse supérieure à la première.

Le document FR-A-2 898 153 décrit un procédé de gestion d'un filtre à particules installé dans la zone des gaz d'échappement d'un moteur à combustion interne et qui doit être le cas échéant régénéré pour éliminer les particules accumulées, selon lequel on chauffe le filtre à particules pour la régénération en influençant la température des gaz d'échappement en amont du filtre à particules. On fixe la température des gaz d'échappement en amont du filtre à particules à une valeur de consigne prédéfinie de température de gaz d'échappement, et la valeur de consigne de température des gaz d'échappement dépend d'au moins une grandeur caractéristique du filtre à particules au cours de la régénération.

Le document FR-A-2 872 852 décrit un procédé de régulation de la régénération d'un filtre à particules par contrôle de la puissance thermique fournie à celui-ci par le moteur du véhicule. Cette puissance et déterminée en temps réel sur la base d'un bilan énergétique de l'activité du filtre permettant de quantifier à chaque instant la puissance thermique dont dispose le filtre et de la comparer à une puissance thermique permettant d'optimiser la régénération. Le document WO 2006/123761 décrit un système de traitement des gaz d'échappement et un procédé de contrôle de ce système, ce procédé de contrôle étant tel que la vitesse de combustion des particules est évaluée et corrigée.

Pour cela, l'invention propose un procédé de détermination de paramètres caractéristiques de l'état d'un filtre à particules dans lequel une pluralité de réactions de combustion de suies ont lieu caractérisé en ce que le procédé comporte les étapes de :

- évaluation de la température instantanée du filtre sur la base d'une équation de conservation de l'énergie appliquée au filtre ;

- calcul des vitesses de réaction de chacune des réactions de combustion des suies en utilisant la température instantanée évaluée et la quantité de matière pour les différentes espèces chimiques dans le filtre à particules,

- prévision d'une quantité de matière consommées théorique pour les différentes espèces chimiques à partir des vitesses calculées ;

- comparaison de la quantité de matière théorique à la quantité de matière présente dans le filtre à particules pour chacune des espèces présentes;

- correction des vitesses calculées lorsque la quantité de matière théorique pour une espèce est supérieure à la quantité de matière présente dans le filtre à particules pour cette espèce, et

- détermination d'au moins un paramètre caractéristique de l'état d'un filtre à particules à l'aide des vitesses corrigées.

Selon une variante le procédé comporte en outre les étapes de :

- établissement d'un bilan de quantité de matière pour chaque espèce présente dans le filtre à particules à partir des vitesses corrigées, et
- détermination de la quantité de chaleur dégagée par les réactions de combustions à partir des vitesses corrigées.

Selon une variante, à l'étape d'établissement du bilan de quantité de matière, la quantité de matière consommée, la quantité restante dans le filtre et la quantité de matière sortant du filtre pour chacune des espèces sont déterminées.

Selon une variante, le procédé est itératif et l'évaluation de la température instantanée du filtre à une itération prend en compte la quantité de chaleur déterminée à l'itération précédente.

Selon une variante, la quantité de matière pour chaque espèce dans le filtre est obtenue à l'aide de la mesure de la composition du mélange gazeux entrant dans le filtre et du débit de gaz dans le filtre.

Selon une variante, la quantité de matière pour chaque espèce dans le filtre inclut également la quantité de matière restant dans le filtre à particules pour chaque espèce.

Selon une variante, l'équation de conservation de l'énergie appliquée au filtre est indépendante de la géométrie du filtre à particules.

Selon une variante, l'équation de conservation de l'énergie appliquée au filtre dépend seulement d'une dimension de la géométrie du filtre à particules.

Selon une variante, le paramètre déterminé est choisi parmi un groupe constitué de :

- la composition du mélange gazeux en sortie du filtre à particules,
- la masse de suie brûlée,
- la masse de suie restant dans le filtre à particules,
- la température interne du filtre à particules,
- la température en sortie du filtre à particules,
- la quantité de chaleur dégagée par les réactions de combustion des suies,
- la vitesse de consommation de l'oxygène en cas de régénération du filtre à particules,
- la vitesse de consommation des oxydes d'azote en cas de régénération du filtre à particules, et
- la durée de combustion des suies.

Selon une variante, les vitesses de chaque réaction sont calculées en utilisant une loi de type Arrhenius.

L'invention se rapporte aussi à un procédé de contrôle du moteur utilisant au moins un paramètre caractéristique de l'état d'un filtre à particules déterminé selon le procédé décrit précédemment.

L'invention se rapporte aussi à un véhicule comportant une ligne d'échappement comprenant un filtre à particules, et un calculateur adapté à mettre en oeuvre l'un des procédés décrit précédemment.

D'autres caractéristiques et avantages de l'invention apparaîtront à la lecture de la description détaillée qui suit des modes de réalisation de l'invention, donnés à titre d'exemple uniquement et en références aux dessins qui montrent :

- figure 1, un organigramme de mise en oeuvre du procédé ;

- figure 2, une représentation schématique d'un bilan thermique.

Il est proposé un véhicule comportant une ligne d'échappement comprenant un filtre à particules. Dans le filtre à particules, une pluralité de réactions de combustion de suies en présence ou non d'additifs et en présence ou non de catalyseurs ont lieu. Le véhicule comprend en outre un calculateur adapté à mettre en oeuvre un procédé de détermination de paramètres caractéristiques de l'état d'un filtre à particules.

Le procédé comporte une étape d'évaluation de la température instantanée du filtre sur la base d'une équation de conservation de l'énergie appliquée au filtre.

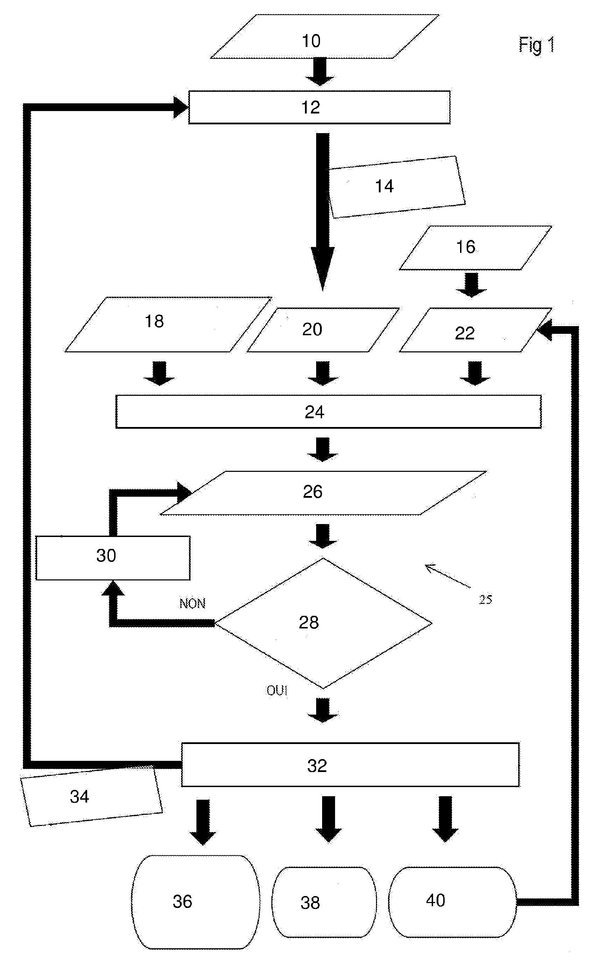

A titre d'exemple, sur la figure 1 à l'étape 12, l'équation de conservation de l'énergie appliquée au filtre peut être indépendante de la géométrie du filtre à particules. Un tel modèle peut être qualifié de modèle à 0 dimension. Une équation de conservation de l'énergie appliquée au filtre dépendant seulement d'une dimension de la géométrie du filtre à particules est également envisageable. Dans ce cas, le modèle est un modèle à une dimension. Les limitations proposées du point de vue du nombre de dimension spatiale prises en compte pour le filtre à particules sont liées aux contraintes du calculateur. Les équations proposées présentent en effet l'avantage d'être calculables dans un calculateur embarqué de véhicule. Par rapport au modèle indépendant de la géométrie du filtre à particules, la modélisation à une dimension permet d'apporter une meilleure évaluation de la thermique du filtre.

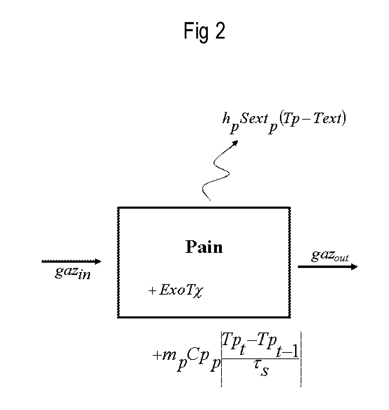

A titre d'exemple (figure 2), la mise en oeuvre du couplage entre le modèle thermique et la cinétique chimique peut être illustrée pour l'équation de conservation de l'énergie appliquée au filtre indépendante de la géométrie du filtre à particules. A chaque pas de temps, l'équation de conservation de l'énergie effectue un bilan tenant compte de la thermique de convection entrée-sortie, de l'inertie du pain (c'est-à-dire le filtre) due à sa masse, des pertes extérieures et de l'exotherme dû à la combustion des suies au pas précédent. L'équation suivante est alors obtenue :

$$\dot{q}_{gaz} Cp_p \left( Tgaz_{in} - Tgaz_{out} \right) + Q = h_p Sext_p \left( Tp - Text \right) + m_p Cp_p \left( \frac{Tp_t - Tp_{t-1}}{\tau_S} \right)$$

Où :

- q_gaz représente **le débit massique du gaz d'échappement;**
- Cp_p représente **la capacité calorifique massique des gaz d'échappement;**
- Tgaz_in représente la température des gaz en entrée du filtre à particules ;
- Tgaz_out représente la température des gaz en sortie du filtre à particules ;
- Q correspond à la quantité de chaleur déterminée à l'itération précédente ;
- h_p correspond au Coefficient d'échange thermique extérieur;
- Sext_p correspond à la surface du filtre en contact avec l'extérieur ;
- Tp est la température du filtre à particules ;
- T_ext est la température extérieure ;
- m_p est la masse du FAP ;
- Tp_t est la température du filtre à particules à l'instant t ;
- Tp_t-1 est la température du filtre à particules à l'instant t-1 ;
- T_s est le temps caractéristique du calcul itératif.

Une résolution de cette équation permet alors de déterminer la température intra-pain à un instant t (référence 14 sur la figure 1). Comme expliqué précédemment, une telle résolution peut être mise en oeuvre dans un calculateur.

Pour résoudre les équations physico-chimiques du modèle, la température et le débit entrée FAP, la quantité de suies totale, ainsi que la composition du mélange gazeux sont nécessaires (étape 10). Ces données peuvent provenir du contrôle moteur, mais également venir de capteurs (débitmètres, thermocouples, sondes, capteurs de suies, capteurs de delta P) lors d'utilisation en boucle ouverte. Toute autre méthode d'obtenir la température le débit et la composition du gaz et quantité de suies sont envisageables.

Le procédé comporte ensuite la détermination du modèle de cinétique chimique de la consommation des suies (étape 24). Le procédé calcule les vitesses de réaction de chacune des réactions de combustion des suies en utilisant la température instantanée évaluée précédemment et la quantité de matière pour les différentes espèces chimiques dans le filtre à particules (références 16 et 22).

Les vitesses de chaque réaction peuvent notamment être calculées en utilisant une loi de type Arrhenius. Un tel calcul peut être réalisé après détermination des quantités de réactifs disponibles à l'instant t. Ainsi, la quantité de matière pour chaque espèce dans le filtre peut être obtenue à l'aide de la mesure de la composition du mélange gazeux entrant dans le filtre et du débit de gaz dans le filtre (référence 18). La quantité de matière pour chaque espèce dans le filtre peut inclure également la quantité de matière restant dans le filtre à particules pour chaque espèce. La température intra-pain 20 évaluée précédemment et la quantité totale de suie 16 sont utilisées.

La vitesse v pour une réaction donnée s'exprime alors sous la forme :

$$v = \frac{d[C]}{dt} = k_0 \cdot \gamma_{additifs / catalyse} \cdot \exp(\frac{-Ea}{RT}) \cdot [A]^{\alpha} \cdot [B]^{\beta}$$

où :

- A représente les pressions partielles de l'oxygène ou d'oxyde d'azote ;
- B représente la masse de suies ;
- C représente la consommation du réactif ;
- $\alpha$ et $\beta$ représentent l'ordre des réactions chimiques ;
- $k_0$ est le facteur pré-exponentiel
- $\gamma$ correspond à la prise en compte de la quantité d'additifs et/ou de catalyseurs ;
- Ea correspond à l'énergie d'activation de la réaction considérée ;
- R est la constante des gaz parfaits ;
- T est la température intra-FAP.

Les vitesses des réactions consommant l'oxygène et les oxydes d'azote sont calculées permettant d'obtenir les quantités de réactifs théoriquement consommés. L'utilisation de cinétiques chimiques permet de mieux estimer l'amorçage des régénérations, ce qui permet de mieux modéliser les temps de régénérations ainsi que la masse restante au sein du filtre à particules.

Ne pouvant résoudre un système d'équations différentielles dans un contrôle moteur embarqué sans consommer trop de temps de calcul, les réactions sont ordonnées par leur cinétique puis calculées de façons indépendantes, ce qui peut entraîner des consommations de réactifs supérieures à ce qui est réellement présent dans le filtre à particules. Il convient ainsi de modérer ces cinétiques (par une boucle 25) en vérifiant que les quantités présentes sont supérieures aux quantités théoriquement consommées.

C'est pourquoi le procédé comporte également une étape de prévision d'une quantité de matière consommée théorique pour les différentes espèces chimiques à partir des vitesses calculées (quantités de suies et moles de gaz consommés à l'étape 26). Le procédé comprend en outre une étape 28 de comparaison de la quantité de matière théorique à la quantité de matière présente dans le filtre à particules pour chacune des espèces présentes. Le procédé comprend en outre la correction (ou limitation) des vitesses calculées lorsque la quantité de matière théorique pour une espèce est supérieure à la quantité de matière présente dans le filtre à particules pour cette espèce (étape 30). La correction des vitesses se fait à l'aide d'une modération en utilisant la totalité du réactif limitant selon l'équation :

$$v = \frac{[\text{Réactif Limitant}]_{sortie}^{entrée} + [\text{Réactif Limitant}]^{stocké}}{dt}$$

L'invention présente l'avantage de prendre en compte la modération des cinétiques par défaut d'un réactif ce qui entraine une surestimation de la consommation des suies dans certains cas de vie. L'invention combine les deux aspects thermodynamiques et cinétiques chimiques tout en respectant les bilans matières. Les étapes précédentes permettent donc de tenir compte de la limitation cinétique due à la compétition entre les réactions sans résoudre les équations différentielles de la cinétique chimique. Cela assure d'obtenir un résultat proche de la situation réel en limitant les calculs effectués.

Le procédé comporte en outre une étape de détermination d'au moins un paramètre caractéristique de l'état d'un filtre à particules à l'aide des vitesses corrigées.

Parmi les paramètres qui peuvent être déterminés à cette étape (données de sortie), se trouvent notamment la composition du mélange gazeux en sortie du filtre à particules (référence 36), la masse de suie brûlée, la masse de suie restant dans le filtre à particules (en particulier en fonction du temps - référence 40), la température interne du filtre à particules, la température en sortie du filtre à particules (en particulier en fonction du temps - référence 38), la quantité de chaleur dégagée par les réactions de combustion des suies, la vitesse de consommation de l'oxygène en cas de régénération du filtre à particules, la vitesse de consommation des oxydes d'azote en cas de régénération du filtre à particules, et la durée de combustion des suies. Ces données sont utilisées dans différents modules du contrôle moteur permettant des stratégies de contrôle moteur et des stratégies de contrôle de la ligne de post-traitement.

Le procédé permet ainsi d'obtenir en sortie des informations sur l'état du filtre à particules en temps réel. Ces informations sont déduites de paramètres qui sont déterminées avec une meilleure précision. En effet, le modèle considéré permet de prendre en compte un maximum de réactions chimiques et leur cinétique respective.

Cette amélioration de la précision est obtenue tout en conservant la facilité des calculs ce qui permet que le procédé puisse être mise en oeuvre dans un calculateur de véhicule.

Cela permet de mieux contrôler la masse de suie dans le filtre, de contenir les fissurations du filtre et d'éviter les risques d'échauffement aggravés du filtre. Il en résulte que le respect des normes émissives de polluants est assuré en masse et en nombre.

L'invention permet le respect de l'On Board Diagnostics, processus de contrôle de l'état du filtre au cours de la vie du véhicule, imposé par la norme Euro6.

Le procédé permet aussi d'optimiser la durée de régénération du filtre à particules. Pour l'utilisateur, cela se traduit par une baisse de la consommation de carburant.

Cela permet en outre de dimensionner au plus juste le substrat filtrant et de choisir des substrats filtrants moins chers puisque moins contraints aux niveaux thermiques élevés.

Le procédé permet aussi de diminuer le phénomène de dilution d'huile. Cela permet de choisir une huile moins chère puisque moins contrainte. La fiabilité des moteurs s'en trouve améliorer.

Pour mettre en oeuvre cette étape de détermination d'au moins un paramètre caractéristique de l'état d'un filtre à particules, le procédé peut comporter des étapes supplémentaires. Ainsi, le procédé peut comporter la détermination d'un modèle d'exotherme et de consommation des réactifs (référence 32). Il s'agit d'une étape d'établissement d'un bilan de quantité de matière pour chaque espèce présente dans le filtre à particules à partir des vitesses corrigées, et une étape de détermination de la quantité de chaleur dégagée par les réactions de combustions à partir des vitesses corrigées. Autrement dit, après la correction des vitesses calculées, le modèle permet de calculer les quantités de réactifs consommés et de produits créés. Il calcule également l'énergie que dégagent les réactions de la combustion des suies en se basant sur les principes de la thermodynamique. L'énergie produite par les réactions de combustion sera utilisée pour le calcul de la température du gaz et du pain. Ceci fait parti du bouclage fort.

Lorsque le procédé est itératif comme c'est le cas selon l'organigramme de la figure 1, l'évaluation de la température instantanée du filtre à une itération peut prendre en compte la quantité de chaleur déterminée à l'itération précédente comme expliqué précédemment (références 14 et 34). Le bouclage temporel permet de réaliser un bouclage fort entre la modélisation thermique et l'utilisation de la cinétique chimique. Le modèle de température à l'intérieur du filtre à particules utilise l'exotherme calculé à la fin du pas de temps précédent pour résoudre le bilan énergétique. De même, le modèle de calcul de cinétique chimique utilise la température à l'intérieur du filtre au pas de temps t pour calculer l'avancement des réactions de combustions. Cela permet de tenir compte de l'énergie dégagée lors de la combustion des suies à chaque pas de temps et ainsi de mieux prédire la température interne du filtre et du gaz d'échappement. L'amorçage de la réaction est correctement estimé, ainsi que la durée de la régénération en temps réel et par conséquence la masse de suies dans le filtre en fonction le temps. Le bouclage fort permet ainsi d'obtenir des paramètres caractéristiques de l'état du filtre de manière plus précise.

Le procédé décrit permet en particulier de mettre en oeuvre un procédé de contrôle d'un moteur embarqué dans un véhicule. La connaissance des paramètres caractéristiques de l'état du filtre permet alors d'adapter le fonctionnement du moteur. La connaissance de la masse des suies dans le filtre peut par exemple permettre de conclure qu'une combustion incomplète s'est produite. Cela est par exemple dû à un manque d'air injecté dans le moteur. En outre, la température du filtre à particule calculée peut être utilisée pour d'autres modèles au sein du calculateur.

L'invention est une modélisation qui associe un modèle de combustion des suies par résolution de la cinétique chimique d'oxydation des suies et un modèle physique de thermique du filtre à particules, permettant le suivi en temps réel de la température intra-pain, de la masse de suies stockée à l'intérieure du FAP, ainsi que la composition simplifiée du mélange gazeux sortant, et ce via le couplage fort de l'évolution des réactions cinétiques et de l'évaluation de la température à chaque pas de temps.

Le procédé permet de bien prendre en compte l'ensemble des espèces présentes à un instant t donné pour pouvoir mieux calculer l'exotherme fourni par les réactions chimiques, ce qui permet d'obtenir des valeurs très proches de ce qui se passe réellement. En plus de prendre en compte toutes les espèces, le bilan matière des espèces chimiques est respecté grâce à la limitation cinétique qui corrige les valeurs de vitesse cinétique que donne la thermodynamique chimique.

**Revendications**

1. Un procédé de détermination de paramètres caractéristiques de l'état d'un filtre à particules dans lequel une pluralité de réactions de combustion de suies ont lieu **caractérisé en ce que** le procédé comporte les étapes de :

   - évaluation (12) de la température instantanée du filtre sur la base d'une équation de conservation de l'énergie appliquée au filtre ;
   - calcul des vitesses de réaction (24) de chacune des réactions de combustion des suies en utilisant la température instantanée évaluée et la quantité de matière pour les différentes espèces chimiques dans le filtre à particules,
   - prévision d'une quantité de matière consommées théorique pour les différentes espèces chimiques à partir des vitesses calculées ;
   - comparaison (28) de la quantité de matière théorique à la quantité de matière présente dans le filtre à particules pour chacune des espèces présentes;
   - correction (30) des vitesses calculées lorsque la quantité de matière théorique pour une espèce est supérieure à la quantité de matière présente dans le filtre à particules pour cette espèce, et
   - détermination d'au moins un paramètre caractéristique (36, 38, 40) de l'état d'un filtre à particules à l'aide des vitesses corrigées.

2. Le procédé selon la revendication 1 **caractérisé en ce que** le procédé comporte en outre les étapes de :

   - établissement d'un bilan de quantité de matière pour chaque espèce présente dans le filtre à particules à partir des vitesses corrigées, et
   - détermination de la quantité de chaleur dégagée par les réactions de combustions à partir des vitesses corrigées.

3. Le procédé selon la revendication 2 **caractérisé en ce qu'**à l'étape d'établissement du bilan de quantité de matière, la quantité de matière consommée, la quantité restante dans le filtre et la quantité de matière sortant du filtre pour chacune des espèces sont déterminées.

4. Le procédé selon l'une des revendications 2 ou 3 **caractérisé en ce que** le procédé est itératif et que l'évaluation de la température instantanée du filtre à une itération prend en compte la quantité de chaleur déterminée à l'itération précédente.

5. Le procédé selon l'une quelconque des revendications 1 à 4 **caractérisé en ce que** la quantité de matière pour chaque espèce dans le filtre est obtenue à l'aide de la mesure de la composition du mélange gazeux entrant dans le filtre et du débit de gaz dans le filtre.

6. Le procédé selon l'une quelconque des revendications 1 à 5 **caractérisé en ce que** la quantité de matière pour chaque espèce dans le filtre inclut également la quantité de matière restant dans le filtre à particules pour chaque espèce.

7. Le procédé selon l'une quelconque des revendications 1 à 6 **caractérisé en ce que** l'équation de conservation de l'énergie appliquée au filtre est indépendante de la géométrie du filtre à particules.

8. Le procédé selon l'une quelconque des revendications 1 à 6 **caractérisé en ce que** l'équation de conservation de l'énergie appliquée au filtre dépend seulement d'une dimension de la géométrie du filtre à particules.

9. Le procédé selon l'une quelconque des revendications 1 à 8 **caractérisé en ce que** le paramètre déterminé est choisi parmi un groupe constitué de :

   - la composition du mélange gazeux en sortie du filtre à particules,

- la masse de suie brûlée,
- la masse de suie restant dans le filtre à particules,
- la température interne du filtre à particules,
- la température en sortie du filtre à particules,
- la quantité de chaleur dégagée par les réactions de combustion des suies,
- la vitesse de consommation de l'oxygène en cas de régénération du filtre à particules,
- la vitesse de consommation des oxydes d'azote en cas de régénération du filtre à particules, et
- la durée de combustion des suies.

10. Le procédé selon l'une quelconque des revendications 1 à 9 **caractérisé en ce que** les vitesses de chaque réaction sont calculées en utilisant une loi de type Arrhenius.

11. Un procédé de contrôle du moteur **caractérisé en ce qu'**il utilise au moins un paramètre caractéristique de l'état d'un filtre à particules déterminé selon le procédé de détermination selon l'une des revendications 1 à 10.

12. Un véhicule **caractérisé en ce que** le véhicule comporte :

- une ligne d'échappement comprenant un filtre à particules,
- un calculateur adapté à mettre en oeuvre le procédé selon l'une des revendications 1 à 10 ou selon la revendication 11.

**Patentansprüche**

1. Verfahren zur Bestimmung charakteristischer Parameter für den Zustand eines Partikelfilters, in dem eine Vielzahl von Ruß-Verbrennungsreaktionen stattfinden, **dadurch gekennzeichnet, dass** das Verfahren die folgenden Schritte umfasst:

- Bewertung (12) der momentanen Temperatur des Filters auf Basis einer Energieerhaltungsgleichung, die auf den Filter angewandt wird;
- Berechnung der Reaktionsgeschwindigkeiten (24) einer jeden der Ruß-Verbrennungsreaktionen unter Verwendung der bewerteten momentanen Temperatur und der Stoffmenge für die verschiedenen chemischen Spezies im Partikelfilter,
- Vorhersage einer theoretischen verbrauchten Stoffmenge für die verschiedenen chemischen Spezies ausgehend von den berechneten Geschwindigkeiten;
- Vergleich (28) theoretischen Stoffmenge mit der im Partikelfilter vorhandenen Stoffmenge für jede der vorhandenen Spezies;
- Korrektur (30) der berechneten Geschwindigkeiten, wenn die theoretische Stoffmenge für eine Spezies größer ist, als die im Partikelfilter vorhandene Stoffmenge für diese Spezies, und
- Bestimmung von zumindest einem charakteristischen Parameter (36, 38, 40) für den Zustand eines Partikelfilters anhand der korrigierten Geschwindigkeiten.

2. Verfahren nach Anspruch 1, **dadurch gekennzeichnet, dass** das Verfahren darüber hinaus die folgenden Schritte umfasst:

- Erstellen einer Bilanz der Stoffmenge für jede Spezies, die im Partikelfilter vorhanden ist, von den korrigierten Geschwindigkeiten ausgehend,und
- Bestimmung der Wärmemenge, die von den Verbrennungsreaktionen ausgehend von den korrigierten Geschwindigkeiten abgegeben wird.

3. Verfahren nach Anspruch 2, **dadurch gekennzeichnet, dass** im Schritt zum Erstellen der Bilanz über die Stoffmenge, die verbrauchte Stoffmenge, die im Filter verbliebene Menge und die Stoffmenge, die aus dem Filter austritt, für jede der Spezies bestimmt wird.

4. Verfahren nach einem der Ansprüche 2 oder 3, **dadurch gekennzeichnet, dass** das Verfahren iterativ ist und die Bewertung der momentanen Temperatur des Filters bei einer Iteration die Wärmemenge berücksichtigt, die bei der vorherigen Iteration bestimmt worden ist.

5. Verfahren nach irgendeinem der Ansprüche 1 bis 4, **dadurch gekennzeichnet, dass** man die Stoffmenge für jede Spezies im Filter anhand der Messung der Zusammensetzung des Gasgemisches erhält, das in den Filter eintritt, sowie anhand des Gasdurchsatzes innerhalb des Filters.

6. Verfahren nach irgendeinem der Ansprüche 1 bis 5, **dadurch gekennzeichnet, dass** die Stoffmenge für jede Spezies im Filter auch die Stoffmenge enthält, die für jede Spezies im Partikelfilter verbleibt.

7. Verfahren nach irgendeinem der Ansprüche 1 bis 6, **dadurch gekennzeichnet, dass** die Energieerhaltungsgleichung, die auf den Filter angewandt wird, unabhängig von der Geometrie des Partikelfilters ist.

8. Verfahren nach irgendeinem der Ansprüche 1 bis 6, **dadurch gekennzeichnet, dass** die Energieerhaltungsgleichung, die auf den Filter angewandt wird, nur von einer Abmessung der Geometrie des Partikelfilters abhängt.

9. Verfahren nach irgendeinem der Ansprüche 1 bis 8, **dadurch gekennzeichnet, dass** der bestimmte Parameter aus einer Gruppe ausgewählt wird, die sich wie folgt zusammensetzt:

   - die Zusammensetzung des Gasgemisches am Ausgang des Partikelfilters,
   - die Masse des verbrannten Rußes,
   - die Masse des im Partikelfilter verbliebenen Rußes,
   - die Innentemperatur des Partikelfilters,
   - die Temperatur am Ausgang des Partikelfilters,
   - die Wärmemenge, die von den Ruß-Verbrennungsreaktionen freigesetzt wird,
   - die Sauerstoffverbrauchsgeschwindigkeit im Falle einer Regeration des Partikelfilters,
   - Stickstoffoxidverbrauchsgeschwindigkeit im Falle einer Regeration des Partikelfilters, und
   - die Dauer der Rußverbrennung.

10. Verfahren nach irgendeinem der Ansprüche 1 bis 9, **dadurch gekennzeichnet, dass** die Geschwindigkeiten einer jeden Reaktion unter Verwendung eines Gesetzes nach Art des Arrhenius-Gesetzes berechnet werden.

11. Verfahren zur Steuerung des Motors, **dadurch gekennzeichnet, dass** es zumindest einen charakteristischen Parameter für den Zustand eines Partikelfilters verwendet, der gemäß dem Bestimmungsverfahren nach einem der Ansprüche 1 bis 10 bestimmt wird.

12. Fahrzeug, **dadurch gekennzeichnet, dass** das Fahrzeug folgendes umfasst:

   - eine Auspuffanlage, einen Partikelfilter umfassend,
   - einen Rechner, der geeignet ist, um das Verfahren nach einem der Ansprüche 1 bis 10 oder nach Anspruch 11 anzuwenden.

**Claims**

1. A method for determining parameters characteristic of the state of a particle filter in which a plurality of soot-combustion reactions take place, **characterised in that** the method comprises the steps of:

   - evaluating (12) the instantaneous temperature of the filter on the basis of an energy conservation equation applied to the filter;
   - calculating the reaction speeds (24) of each of the soot-combustion reactions using the instantaneous temperature evaluated and the quantity of material for the various chemical species in the particle filter,
   - predicting a theoretical quantity of consumed material for the various chemical species from the calculated speeds;
   - comparing (28) the theoretical quantity of material with the quantity of material present in the particle filter for each of the species present;
   - correcting (30) the calculated speeds when the theoretical quantity of material for a species is greater than the quantity of material present in the particle filter for this species, and
   - determining at least one parameter (36, 38, 40) characteristic of the state of a particle filter using the corrected speeds.

2. The method according to claim 1, **characterised in that** the method further comprises the steps of:

   - establishing an assessment of the quantity of material for each species present in the particle filter from the corrected speeds, and
   - determining the quantity of heat given off by the combustion reactions from the corrected speeds.

3. The method according to claim 2, **characterised in that**, at the step of establishing the assessment of the quantity of material, the quantity of material consumed, the quantity remaining in the filter and the quantity of material emerging from the filter for each of the species are determined.

4. The method according to one of claims 2 or 3, **characterised in that** the method is iterative and **in that** the evaluation of the instantaneous temperature of the filter at one iteration takes into account the quantity of heat determined at the previous iteration.

5. The method according to any one of claims 1 to 4, **characterised in that** the quantity of material for each species in the filter is obtained by using the measurement of the composition of the gaseous mixture entering the filter and the flow rate of gas in the filter.

6. The method according to any one of claims 1 to 5, **characterised in that** the quantity of material for each species in the filter also includes the quantity of material remaining in the particle filter for each species.

7. The method according to any one of claims 1 to 6, **characterised in that** the energy conservation equation applied to the filter is independent of the geometry of the particle filter.

8. The method according to any one of claims 1 to 6, **characterised in that** the energy conservation equation applied to the filter depends only on a dimension of the geometry of the particle filter.

9. The method according to any one of claims 1 to 8, **characterised in that** the given parameter is chosen from a group consisting of:

   - the composition of the gaseous mixture emerging from the particle filter,
   - the mass of soot burnt,
   - the mass of soot remaining in the particle filter,
   - the internal temperature of the particle filter,
   - the temperature at the discharge from the particle filter,
   - the quantity of heat given off by the soot-combustion reactions,
   - the speed of consumption of the oxygen in the case of regeneration of the particle filter,
   - the speed of consumption of the nitrogen oxides in the case of regeneration of the particle filter, and
   - the duration of combustion of the soot.

10. The method according to any one of claims 1 to 9, **characterised in that** the speeds of each reaction are calculated using a law of the Arrhenius type.

11. An engine control method, **characterised in that** it uses at least one parameter characteristic of the state of a particle filter determined according to the determination method according to one of claims 1 to 10.

12. A vehicle **characterised in that** the vehicle comprises:

   - an exhaust line comprising a particle filter,
   - a computer suitable for implementing the method according to one of claims 1 to 10 or according to claim 11.

Fig 1

```
                    ┌──────────────┐
                    │      10      │
                    └──────┬───────┘
                           ▼
              ┌────────────────────────┐
      ┌──────▶│           12           │
      │       └───────────┬────────────┘
      │                   │        ┌──────────┐
      │                   │        │    14    │
      │                   │        └──────────┘
      │                   │              ┌────────────┐
      │                   │              │     16     │
      │                   │              └─────┬──────┘
      │                   ▼                    ▼
   ┌────────┐      ┌────────────┐       ┌────────────┐
   │   18   │      │     20     │       │     22     │◀──┐
   └───┬────┘      └─────┬──────┘       └─────┬──────┘   │
       ▼                 ▼                    ▼          │
      ┌──────────────────────────────────────────┐      │
      │                    24                      │      │
      └──────────────────┬─────────────────────────┘      │
                         ▼                                 │
              ┌──────────────────────┐                     │
              │          26          │                     │
              └──────────┬───────────┘                     │
                         ▼                     ↖ 25        │
   ┌──────────┐      ╱─────────╲                            │
   │    30    │◀─────       28    ─────                     │
   └──────────┘  NON  ╲─────────╱                           │
                         │ OUI                              │
                         ▼                                  │
      ┌─────────────────────────────────────────┐          │
   ┌──│                   32                      │          │
   │  └────────┬──────────┬──────────┬───────────┘          │
   │ ┌────┐    ▼          ▼          ▼                       │
   │ │ 34 │  ┌────┐    ┌────┐    ┌────┐                      │
   │ └────┘  │ 36 │    │ 38 │    │ 40 │──────────────────────┘
   │         └────┘    └────┘    └────┘
```

Fig 2

$$h_p Sext_p (Tp - Text)$$

Pain

$+ExoT\chi$

$gaz_{in}$

$gaz_{out}$

$$+m_p Cp_p \left| \frac{Tp_t - Tp_{t-1}}{\tau_s} \right|$$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004015248 A
- EP 1873369 A
- FR 2898153 A
- FR 2872852 A
- WO 2006123761 A